# EUROPEAN PATENT SPECIFICATION

(11) **EP 1 463 349 B1**
(45) Date of publication and mention of the grant of the patent: **02.08.2006**
(21) Application number: 04250872.1
(22) Date of filing: 18.02.2004
(51) Int. Cl.: H04Q 7/32, H04M 1/274

(54) **Method of controlling a switch device using a mobile terminal in a wireless communications network**
Verfahren zur Kontrolle einer Schaltvorrichtung unter Verwendung eines mobilen Endgerätes in einem drahtlosen Kommunikationsnetzwerk
Procédé pour contrôler un dispositif de commutation utilisant un terminal mobile dans un réseau de communications sans fil

(30) Priority: 24.03.2003 US 395479
(43) Date of publication of application: 29.09.2004
(73) Proprietor: Huang, Wen-Fu, Kaohsiung City, Taiwan (CN)
(72) Inventor: Huang, Wen-Fu, Kaohsiung City Taiwan (CN); Ho, Su-Yeh, Ta-Li City Taichung Hsien, Taiwan (CN)
(74) Representative: Mounteney, Simon James

(56) References cited:
- EP-A- 0 783 219
- EP-A- 0 901 263
- DE-U- 20 211 313
- US-B1- 6 314 306
- US-B1- 6 473 501

## Description

This invention relates to a method of controlling a switch device using a mobile terminal in a wireless communications network.

Recently, it has become possible to control a switch device using a mobile terminal, such as a mobile phone, in a wireless communications network, such as a public land mobile phone network (PLMN). It is noted that the switch device can be controlled by a control signal generated by the mobile terminal and associated with an incoming call after the mobile terminal answers the incoming call, thereby resulting in additional communications fees and waste of network resources.

EP-A-0783219 discloses a mobile terminal having the features of the precharacterising portion of Claim 1, including directing a call to an answerphone depending on the caller identification.

DE-U-20211313 discloses a switching device with a fixed line telephone receiver, for controlling equipment using ring tones from a remote telephone.

Therefore, the object of the present invention is to provide a method of controlling a switch device using a mobile terminal in a wireless communications network which can overcome the drawbacks associated with the aforesaid prior art.

The invention provides a method as defined in Claim 1 of controlling a switch device using a mobile terminal in a wireless communications network.

According to another aspect of the present invention, there is provided a corresponding computer program product as defined in Claim 5.

The invention also provides a control terminal as defined in Claim 6.

Other features and advantages of the present inventionwill become apparent in the following detailed description of the preferred embodiment with reference to the accompanying drawings, of which:
Figure 1 is a schematic electrical circuit block diagram illustrating a mobile terminal that is configured according to the preferred embodiment of a method of controlling a switch device using the mobile terminal of the present invention; and
Figures 2A and 2B are flow charts illustrating how the mobile terminal is configured to control the switch device in accordance with the method of the preferred embodiment.

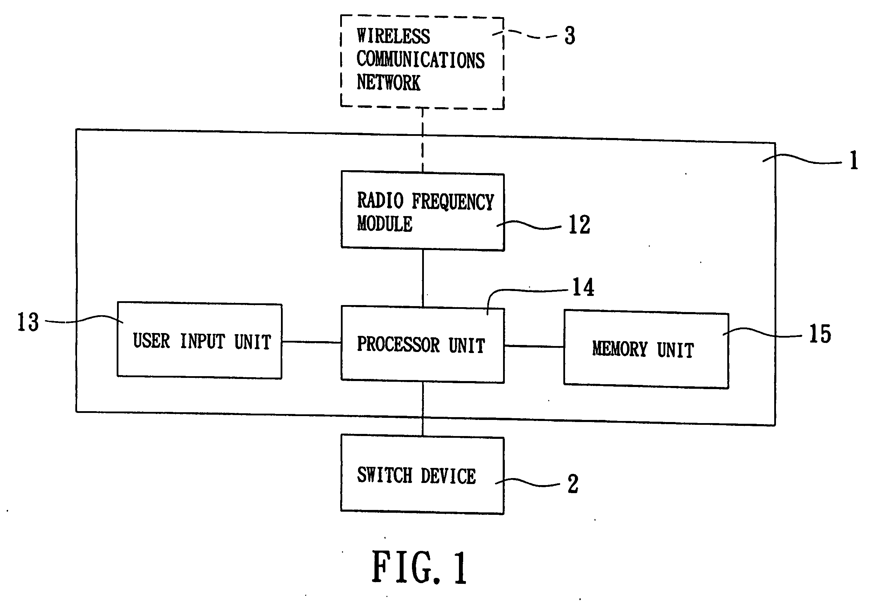

Figure 1 illustrates a mobile terminal 1, such as a mobile phone, that is configured to operate as a control terminal according to the preferred embodiment of a method of controlling a switch device 2 using the mobile terminal 1 in a wireless communications network 3, such as a public land mobile phone network (PLMN). The mobile terminal 1 includes a radio frequency module 12, a user input unit 13, a memory unit 15, and a processor unit 14 coupled to the radio frequency module 12, the user input unit 13 and the memory unit 15, and the switch device 2. The mobile terminal 1 further includes a computer program product which, in this embodiment, is resident in the memory unit 15.

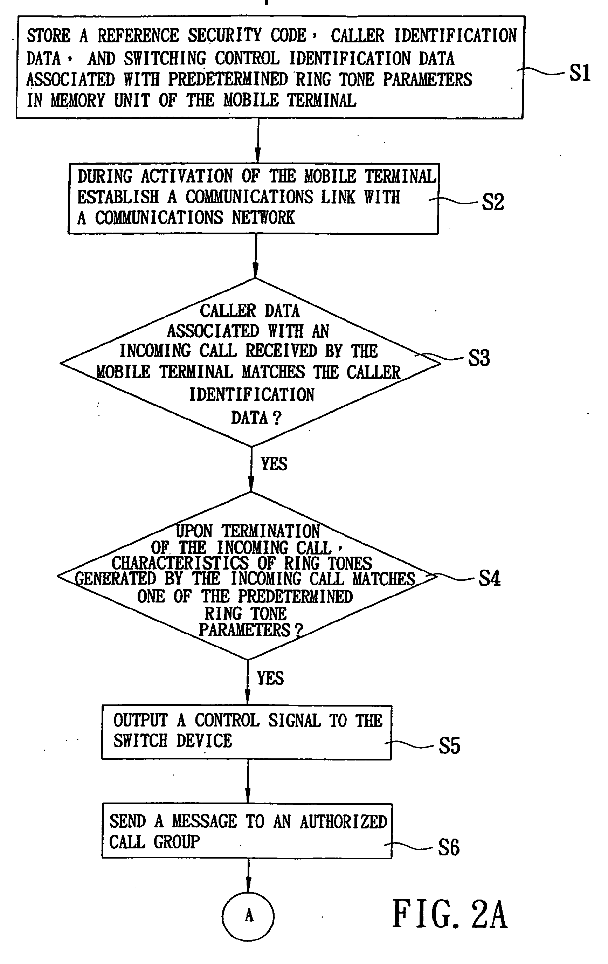

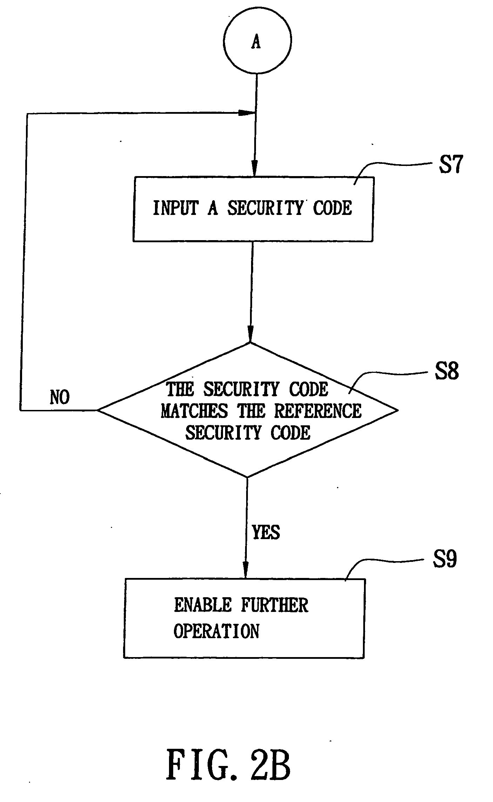

Referring to Figures 2A and 2B, flow charts are shown to illustrate how the mobile terminal 1 is configured to control the switch device 2 in accordance with the method of the preferred embodiment. In step S1, a first code of the computer program product configures the processor unit 14 to allow the owner of the mobile terminal 1 to store caller identification data and switching control identification data in the memory unit 15 of the mobile terminal 1. The caller identification data includes a set of call numbers, such as international subscriber identification codes, which are associated with an authorized caller group that is set via the user input unit 13. The switching control identification data are associated with predetermined ring tone parameters, such as the number or duration of ring tones. In this embodiment, the owner of the mobile terminal 1 is further allowed to store a reference security code in the memory unit 15. In step S2, a second code of the computer program product configures the processor unit 14 to allow the mobile terminal 1 to establish a communications link with the communications network 3 via the radio frequency module 12 during activation of the mobile terminal 1. In step S3, a third code of the computer program product configures the processor unit 14 to verify whether caller data that is associated with an incoming call received by the mobile terminal 1 matches the caller identification data stored in the memory unit 15 of the mobile terminal 1 and associated with the authorized caller group when the communications link with the communications network 3 is established. In step S4, when a match is detected, a fourth code of the computer program product configures the processor unit 14 to verify whether the characteristics of ring tones generated by the incoming call matches one of the predetermined ring tone parameters upon termination of the incoming call. In step S5, when a match between ring tone characteristics and the predetermined ring tone parameters is detected, a fifth code of the computer program product configures the processor unit 14 to output a control signal associated with the switching control identification data that corresponds to said matching one of the predetermined ring tone parameters to the switch device 2 so as to enable the switch device 2 to switch to a desired mode in response to the control signal. In step S6, a sixth code of the computer program product configures the processor unit 14 to enable the mobile terminal 1 to send a message to the authorized caller group through the communications network 3. The message indicates a present mode of the switch device 2. In this embodiment, the message may have a format that complies with the conventional short message service, and may include caller identification information, i.e., the call number of the incoming call, and the time at which the incoming call was received by the mobile terminal 1. Alternatively, the message may be in the form of ring tones. In step S7, the computer program product configures the processor unit 14 to allow the user of the mobile terminal 1 to input a security code. In step S8, the computer program product configures the processor unit 14 to verify whether the security code matches the reference security code stored in the memory unit 15. In step S9, when the security code matches the reference security code, the computer program product configures the processor unit 14 to enable further operation of the mobile terminal 1, such as setting, changing, searching or deleting of one of the reference security code, the caller identification data and the switching control identification data.

Therefore, according to the method of the present invention, when the characteristics of ring tones generated by an incoming call that belongs to the authorized caller group matches one of the predetermined ring tone parameters upon termination of the incoming call, the switch device 2 can be switched to a desired mode according to a control signal outputted by the mobile terminal 1 and corresponding to said matching one of the predetermined ring tone parameters. As such, the mobile terminal 1 need not answer the incoming call for controlling the switch device 2 such that communications fees can be reduced to a minimum. Moreover, since the caller data associated with the incoming call and the characteristics of ring tones generated by the incoming call can be obtained within a short time period, waste of network resources can be avoided.

## Claims

1. A method of controlling a device (2) using a mobile terminal (1) in a wireless communications network (3), comprising the steps of:
(a) allowing the owner of the mobile terminal (1) to store caller identification data which include a set of call numbers that are associated with an authorized caller group;
(b) during activation of the mobile terminal (1), allowing the mobile terminal (1) to establish a communications link with the communications network (3);
(c) upon establishing the communications link with the communications network (3), verifying whether caller identification data that are associated with an incoming call received by the mobile terminal (1) match the caller identification data stored in the memory unit (15) of the mobile terminal (1) and associated with the authorized caller group; and
(d) enabling the mobile terminal (1) to output a control signal to the device (2) so as to enable the device (2) to perform a function in response to the control signal;
**characterized in that** the device (2) is a switch device; **in that** in step (a) the owner is allowed to store in the memory unit (15) switching control identification data that are associated with predetermined ring tone parameters other than caller identification data;
by the step of verifying, when a match is detected in step (c), and upon termination of the incoming call, whether the characteristics of ring tones generated by the incoming call match one of the predetermined ring tone parameters; and by
executing step (d) only when there is a match with the ring tone characteristics, the control signal output in step (d) being one that is associated with the switching control identification data that correspond to the matching ring tone parameter, and being such as to enable the switch device (2) to switch to a desired mode.

2. A method as claimed in Claim 1, comprising enabling the mobile terminal (1) to send a message to the authorised caller group through the communications network (3), the message indicating the current mode of the switch device (2).

3. A method as claimed in Claim 1 or Claim 2, wherein in step (a), the owner of the mobile terminal (1) is further allowed to store a reference security code in the memory unit (15) of the mobile terminal (1);
said method further comprising the steps of:
allowing the user of the mobile terminal (1) to input a security code;
verifying whether the security code matches the reference security code; and
enabling further operation of the mobile terminal (1) only when the security code matches the reference security code.

4. A method as claimed in any preceding claim, wherein the predetermined ring tone parameters comprise specific numbers of ring tones or specific durations of ring tones transmitted before termination of the call.

5. A computer program product for a mobile terminal (1) that communicates wirelessly with a communications network (3), the mobile terminal (1) including a user input unit (13), a memory unit (15), and a processor unit (14) coupled to the user input unit (13), the memory unit (15) and a device (2), said computer program product residing in said memory unit (15) and enabling the mobile terminal (1) to control the device (2), said computer program product having code that directs the processor unit (14) to perform the steps of:
(a) allowing the owner of the mobile terminal (1) to store caller identification data which include a set of call numbers that are associated with an authorized caller group;
(b) during activation of the mobile terminal (1), allowing the mobile terminal (1) to establish a communications link with the communications network (3);
(c) upon establishing the communications link with the communications network (3), verifying whether caller identification data that are associated with an incoming call received by the mobile terminal (1) match the caller identification data stored in the memory unit (15) of the mobile terminal (1) and associated with the authorized caller group; and
(d) enabling the mobile terminal (1) to output a control signal to the device (2) so as to enable the device (2) to perform a function in response to the control signal;
**characterised in that** the device (2) is a switch device and the code further directs the processor unit (14) in step (a) to allow the owner to store in the memory unit (15) switching control identification data that are associated with predetermined ring tone parameters other than caller identification data;
to verify, when a match is detected in step (c), and upon termination of the incoming call, whether the characteristics of ring tones generated by the incoming call match one of the predetermined ring tone parameters; and
to execute step (d) only when there is a match with the ring tone characteristics, the control signal output in step (d) being one that is associated with the switching control identification data that correspond to the matching ring tone parameter, and being such as to enable the switch device (2) to switch to a desired mode.

6. A control terminal capable of wireless communication with a communications network (3) for controlling a device (2), said control terminal comprising:
a radio frequency module (12);
a memory unit (15);
means for allowing the owner of said control terminal to store caller identification data which includes a set of call numbers that are associated with an authorized caller group, in said memory unit (15);
means for allowing said control terminal to establish a communications link with the communications network (3) via said radio frequency module (12) during activation of said control terminal;
means for verifying whether caller identification data that is associated with an incoming call received by said control terminal matches the caller identification data stored in said memory unit (15) and associated with the authorized caller group upon establishing the communications link with the communications network (3); and
means for outputting a control signal to the device (2) so as to enable the device (2) to perform a desired function in response to the control signal;
**characterized in that** the device (2) is a switch device; **in that** the means for allowing the owner to store caller identification data also allow the owner to store switching control identification data that are associated with predetermined ring tone parameters other than caller identification data ;
**in that** the control terminal comprises means for verifying, upon termination of the incoming call, whether the characteristics of ring tones generated by the incoming call match one of the predetermined ring tone parameters when a match of caller identification data is detected; and
**in that** the control signal is associated with the switching control identification data that correspond to said matching one of the predetermined ring tone parameters, and the control signal is such as to enable the switch device (2) to switch to a desired mode when a match between ring tone characteristics and the predetermined ring tone parameters is detected.

7. A control terminal as claimed in Claim 6, comprising:
a user input unit (13);
a processor unit (14) coupled to said user input unit (13), said memory unit (15) and said radio frequency module (12) and adapted to be coupled to the switch device (2); and
a computer program product as defined in Claim 5 resident in said memory unit (15) for enabling said control terminal to control the switch device (2); whereby said processing unit constitutes said allowing means and said verifying means.

8. A control terminal as claimed in Claim 6 or Claim 7, comprising means for enabling the mobile terminal (1) to send a message to the authorised caller group through the communications network (3), the message indicating the current mode of the switch device (2).

9. A control terminal as claimed in Claim 6, 7 or 8, comprising means for allowing the owner to store a reference security code in the memory unit (15) of the mobile terminal (1); for allowing the user of the mobile terminal (1) to input a security code; verifying whether the security code matches the reference security code; and enabling further operation of the mobile terminal (1) only when the security code matches the reference security code.

10. A control terminal as claimed in Claim 6, 7, 8 or 9, wherein the predetermined ring tone parameters comprise specific numbers of ring tones or specific durations of ring tones transmitted before termination of the call.

## Patentansprüche

1. Verfahren zur Steuerung einer Vorrichtung (2) unter Verwendung eines mobilen Endgeräts (1) in einem drahtlosen Kommunikationsnetzwerk (3) mit den folgenden Schritten:
(a) Erlauben, daß der Besitzer des mobilen Endgeräts (1) Anrufer-Identifizierungsdaten speichert, die eine Menge von Rufnummern aufweisen, die einer autorisierten Anrufergruppe zugeordnet sind;
(b) während der Aktivierung des mobilen Endgeräts (1) erfolgendes Erlauben, daß das mobile Endgerät (1) eine Kommunikationsverbindung mit dem Kommunikationsnetzwerk (3) aufbaut;
(c) nach Aufbau der Kommunikationsverbindung mit dem Kommunikationsnetzwerk (3) erfolgendes Überprüfen, ob Anrufer-Identifizierungsdaten, die einem durch das mobile Endgerät (1) empfangenen ankommenden Ruf zugeordnet sind, mit den Anrufer-Identifizierungsdaten übereinstimmen, die in der Speichereinheit (15) des mobilen Endgeräts (1) gespeichert und der autorisierten Anrufergruppe zugeordnet sind; und
(d) Befähigen des mobilen Endgeräts (1), ein Steuersignal an die Vorrichtung (2) auszugeben, um die Vorrichtung (2) zu befähigen, als Antwort auf das Steuersignal eine Funktion auszuführen;
**dadurch gekennzeichnet, daß** die Vorrichtung (2) eine Schaltervorrichtung ist; und daß dem Besitzer in Schritt (a) erlaubt wird, Identifizierungsdaten zur Schaltersteuerung, die vorbestimmten Rufzeichenparametern zugeordnet sind, außer Anrufer-Identifizierungsdaten, in der Speichereinheit (15) zu speichern;
durch den folgenden Schritt: wenn in Schritt (c) eine Übereinstimmung ermittelt wird und nach Beendigung des ankommenden Rufs, Überprüfen, ob die charakteristischen Merkmale von durch den ankommenden Ruf erzeugten Rufzeichen mit einem der vorbestimmten Rufzeichenparameter übereinstimmen; und
daß Schritt (d) nur dann ausgeführt wird, wenn es eine Übereinstimmung mit den charakteristischen Rufzeichenmerkmalen gibt, wobei das in Schritt (d) ausgegebene Steuersignal eines ist, das den Identifizierungsdaten zur Schaltersteuerung zugeordnet ist, die dem übereinstimmenden Rufzeichenparameter entsprechen, und so beschaffen ist, daß die Schaltervorrichtung (2) befähigt wird, in einen erwünschten Modus umzuschalten.

2. Verfahren nach Anspruch 1 mit dem folgenden Schritt: Befähigen des mobilen Endgeräts (1), eine Nachricht über das Kommunikationsnetzwerk (3) an die autorisierte Anrufergruppe zu senden, wobei die Nachricht den aktuellen Modus der Schaltervorrichtung (2) anzeigt.

3. Verfahren nach Anspruch 1 oder 2, wobei in Schritt (a) dem Besitzer des mobilen Endgeräts (1) ferner erlaubt wird, einen Referenz-Sicherheitscode in der Speichereinheit (15) des mobilen Endgeräts (1) zu speichern;
wobei das Verfahren ferner die folgenden Schritte umfasst:
Erlauben, daß der Benutzer des mobilen Endgeräts (1) einen Sicherheitscode eingibt;
Überprüfen, ob der Sicherheitscode mit dem Referenz-Sicherheitscode übereinstimmt; und
Freigeben des weiteren Betriebs des mobilen Endgeräts (1) nur dann, wenn der Sicherheitscode mit dem Referenz-Sicherheitscode übereinstimmt.

4. Verfahren nach einem der vorhergehenden Ansprüche, wobei die vorbestimmten Rufzeichenparameter spezifische Anzahlen von Rufzeichen oder spezifische Dauern von Rufzeichen umfassen, die vor der Beendigung des Rufs übertragen werden.

5. Computerprogramm-Erzeugnis für ein mobiles Endgerät (1), das drahtlos mit einem Kommunikationsnetzwerk (3) kommuniziert, wobei das mobile Endgerät (1) eine Benutzer-Eingabeeinheit (13), eine Speichereinheit (15) und eine mit der Benutzer-Eingabeeinheit (13), der Speichereinheit (15) und einer Vorrichtung (2) gekoppelte Prozessoreinheit (14) aufweist, wobei das Computerprogramm-Erzeugnis in der Speichereinheit (15) resident ist und das mobile Endgerät (1) befähigt, die Vorrichtung (2) zu steuern, wobei das Computerprogramm-Erzeugnis Code umfasst, der die Prozessoreinheit (14) anweist, die folgenden Schritte durchzuführen:
(a) Erlauben, daß der Besitzer des mobilen Endgeräts (1) Anrufer-Identifizierungsdaten speichert, die eine Menge von Rufnummern aufweisen, die einer autorisierten Anrufergruppe zugeordnet sind;
(b) während der Aktivierung des mobilen Endgeräts (1) erfolgendes Erlauben, daß das mobile Endgerät (1) eine Kommunikationsverbindung mit dem Kommunikationsnetzwerk (3) aufbaut;
(c) nach Aufbau der Kommunikationsverbindung mit dem Kommunikationsnetzwerk (3) erfolgendes Überprüfen, ob Anrufer-Identifizierungsdaten, die einem durch das mobile Endgerät (1) empfangenen ankommenden Ruf zugeordnet sind, mit den Anrufer-Identifizierungsdaten übereinstimmen, die in der Speichereinheit (15) des mobilen Endgeräts (1) gespeichert und der autorisierten Anrufergruppe zugeordnet sind; und
(d) Befähigen des mobilen Endgeräts (1), ein Steuersignal an die Vorrichtung (2) auszugeben, um die Vorrichtung (2) zu befähigen, als Antwort auf das Steuersignal eine Funktion auszuführen;
**dadurch gekennzeichnet, daß** die Vorrichtung (2) eine Schaltervorrichtung ist und der Code die Prozessoreinheit (14) ferner anweist, dem Besitzer in Schritt (a) zu erlauben, Identifizierungsdaten zur Schaltersteuerung, die vorbestimmten Rufzeichenparametern zugeordnet sind, außer Anrufer-Identifizierungsdaten, in der Speichereinheit (15) zu speichern;
wenn in Schritt (c) eine Übereinstimmung ermittelt wird und nach Beendigung des ankommenden Rufs zu überprüfen, ob die charakteristischen Merkmale von durch den ankommenden Ruf erzeugten Rufzeichen mit einem der vorbestimmten Rufzeichenparameter übereinstimmen; und
Schritt (d) nur auszuführen, wenn es eine Übereinstimmung mit den charakteristischen Rufzeichenmerkmalen gibt, wobei das in Schritt (d) ausgegebene Steuersignal eines ist, das den Identifizierungsdaten zur Schaltersteuerung zugeordnet ist, die dem übereinstimmenden Rufzeichenparameter entsprechen, und so beschaffen ist, daß die Schaltervorrichtung (2) befähigt wird, in einen erwünschten Modus umzuschalten.

6. Steuer-Endgerät, das zur drahtlosen Kommunikation mit einem Kommunikationsnetzwerk (3) zur Steuerung einer Vorrichtung (2) imstande ist, wobei das Steuer-Endgerät folgendes umfasst:
ein Funkfrequenzmodul (12);
eine Speichereinheit (15);
Mittel zum Erlauben, daß der Besitzer des Steuer-Endgerät Anrufer-Identifizierungsdaten, die eine Menge von Rufnummern aufweisen, die einer autorisierten Anrufergruppe zugeordnet sind, in der Speichereinheit (15) speichert;
Mittel zum Erlauben, daß das Steuer-Endgerät während der Aktivierung des Steuer-Endgeräts eine Kommunikationsverbindung mit dem Kommunikationsnetzwerk (3) über das Funkfrequenzmodul (12) aufbaut;
Mittel zum Überprüfen nach dem Aufbau der Kommunikationsverbindung mit dem Kommunikationsnetzwerk (3), ob Anrufer-Identifizierungsdaten, die einem durch das Steuer-Endgerät empfangenen ankommenden Ruf zugeordnet sind, mit den Anrufer-Identifizierungsdaten übereinstimmen, die in der Speichereinheit (15) gespeichert und der autorisierten Anrufergruppe zugeordnet sind; und
Mittel zum Ausgeben eines Steuersignals an die Vorrichtung (2), um die Vorrichtung (2) zu befähigen, eine erwünschte Funktion als Antwort auf das Steuersignal auszuführen;
**dadurch gekennzeichnet, daß** die Vorrichtung (2) eine Schaltervorrichtung ist; daß die Mittel zum Erlauben, daß der Besitzer des Steuer-Endgeräts Anrufer-Identifizierungsdaten speichert, dem Benutzer auch erlauben, Identifizierungsdaten zur Schaltersteuerung, die vorbestimmten Rufzeichenparametern zugeordnet sind, außer Anrufer-Identifizierungsdaten, zu speichern;
daß das Steuer-Endgerät Mittel umfasst, die dafür bestimmt sind, nach Beendigung des ankommenden Rufs zu überprüfen, ob die charakteristischen Merkmale von durch den ankommenden Ruf erzeugten Rufzeichen mit einem der vorbestimmten Rufzeichenparameter übereinstimmen, wenn eine Übereinstimmung der Anrufer-Identifizierungsdaten ermittelt wird; und
daß das Steuersignal den Identifizierungsdaten zur Schaltersteuerung zugeordnet ist, die dem übereinstimmenden der Rufzeichenparameter entsprechen, und daß das Steuersignal so beschaffen ist, daß die Schaltervorrichtung (2) befähigt wird, in einen erwünschten Modus umzuschalten, wenn eine Übereinstimmung zwischen charakteristischen Rufzeichenmerkmalen und den vorbestimmten Rufzeichenparametern ermittelt wird.

7. Steuer-Endgerät nach Anspruch 6 mit:
einer Benutzer-Eingabeeinheit (13);
einer Prozessoreinheit (14), die mit der Benutzer-Eingabeeinheit (13), der Speichereinheit (15) und dem Funkfrequenzmodul (12) gekoppelt ist und dafür eingerichtet ist, mit der Schaltervorrichtung (2) gekoppelt zu werden; und
einem Computerprogramm-Erzeugnis nach Anspruch 5, das in der Speichereinheit (15) resident ist, zum Befähigen des mobilen Endgeräts (1), die Schaltervorrichtung (2) zu steuern; wobei die Prozessoreinheit die Mittel zum Erlauben und die Überprüfungsmittel darstellt.

8. Steuer-Endgerät nach Anspruch 6 oder 7 mit Mitteln zum Befähigen des mobilen Endgeräts (1), über das Kommunikationsnetzwerk (3) eine Nachricht an die autorisierte Anrufergruppe zu senden, wobei die Nachricht den aktuellen Modus der Schaltervorrichtung (2) anzeigt.

9. Steuer-Endgerät nach Anspruch 6, 7 oder 8 mit Mitteln zum Erlauben, daß der Besitzer einen Referenz-Sicherheitscode in der Speichereinheit (15) des mobilen Endgeräts (1) speichert; einen Sicherheitscode eingibt; zum Erlauben, daß der Besitzer des mobilen Endgeräts (1) einen Sicherheitscode eingibt; zum Überprüfen, ob der Sicherheitscode mit dem Referenz-Sicherheitscode übereinstimmt; und zum Freigeben des weiteren Betriebs des mobilen Endgeräts (1) nur dann, wenn der Sicherheitscode mit dem Referenz-Sicherheitscode übereinstimmt.

10. Steuer-Endgerät nach Anspruch 6, 7, 8 oder 9, wobei die vorbestimmten Rufzeichenparameter spezifische Anzahlen von Rufzeichen oder spezifische Dauern von Rufzeichen umfassen, die vor der Beendigung des Rufs übertragen werden.

## Revendications

1. Procédé de commande d'un dispositif (2) en utilisant un terminal mobile (1) dans un réseau de communication sans fil (3), comprenant les étapes de:
(a) autorisation du propriétaire du terminal mobile (1) pour qu'il stocke des données d'identification d'appelant qui incluent un jeu de numéros d'appel qui sont associés à un groupe d'appelants autorisés;
(b) pendant une activation du terminal mobile (1), autorisation du terminal mobile (1) pour qu'il établisse une liaison de communication avec le réseau de communication (3);
(c) suite à l'établissement de la liaison de communication avec le réseau de communication (3), vérification de si oui ou non des données d'identification d'appelant qui sont associées à un appel arrivant qui est reçu par le terminal mobile (1) correspondent aux données d'identification d'appelant qui sont stockées dans l'unité de mémoire (15) du terminal mobile (1) et qui sont associées au groupe d'appelants autorisés; et
(d) validation du terminal mobile (1) pour qu'il émette en sortie un signal de commande sur le dispositif (2) de manière à valider le dispositif (2) pour qu'il réalise une fonction en réponse au signal de commande,
**caractérisé en ce que** le dispositif (2) est un dispositif de commutateur; **en ce que**, au niveau de l'étape (a), le propriétaire est autorisé à stocker dans l'unité de mémoire (15) des données d'identification de commande de commutation qui sont associées à des paramètres de tonalité de sonnerie prédéterminés autres que des données d'identification d'appelant;
par l'étape de vérification, lorsqu'une correspondance est détectée au niveau de l'étape (c) et suite à la menée à terme de l'appel arrivant, de si oui ou non les caractéristiques de tonalités de sonnerie qui sont générées par l'appel arrivant correspondent à l'un des paramètres de tonalité de sonnerie prédéterminés; et par
l'exécution de l'étape (d) seulement lorsqu'il y a une correspondance avec les caractéristiques de tonalités de sonnerie, la sortie de signal de commande au niveau de l'étape (d) étant une sortie qui est associée aux données d'identification de commande de commutation qui correspondent au paramètre de tonalité de sonnerie en correspondance et étant telle qu'elle valide le dispositif de commutateur (2) pour qu'il se commute selon un mode souhaité.

2. Procédé selon la revendication 1, comprenant la validation du terminal mobile (1) pour qu'il envoie un message sur le groupe d'appelants autorisés par l'intermédiaire du réseau de communication (3), le message indiquant le mode courant du dispositif de commutateur (2).

3. Procédé selon la revendication 1 ou 2, dans lequel, au niveau de l'étape (a), le propriétaire du terminal mobile (1) est en outre autorisé à stocker un code de sécurité de référence dans l'unité de mémoire (15) du terminal mobile (1),
ledit procédé comprenant en outre les étapes de:
autorisation de l'utilisateur du terminal mobile (1) pour qu'il entre un code de sécurité;
vérification de si oui ou non le code de sécurité correspond au code de sécurité de référence; et
validation d'un fonctionnement supplémentaire du terminal mobile (1) seulement lorsque le code de sécurité correspond au code de sécurité de référence.

4. Procédé selon l'une quelconque des revendications précédentes, dans lequel les paramètres de tonalité de sonnerie prédéterminés comprennent des nombres spécifiques de tonalités de sonnerie ou des durées spécifiques de tonalités de sonnerie comme transmis avant la menée à terme de l'appel.

5. Produit de programme d'ordinateur pour un terminal mobile (1) qui communique sans fil avec un réseau de communication (3), le terminal mobile (1) incluant une unité d'entrée d'utilisateur (13), une unité de mémoire (15) et une unité de processeur (14) qui est couplée à l'unité d'entrée d'utilisateur (13), à l'unité de mémoire (15) et à un dispositif (2), ledit produit de programme d'ordinateur résidant dans ladite unité de mémoire (15) et validant le terminal mobile (1) pour qu'il commande le dispositif (2), ledit produit de programme d'ordinateur disposant d'un code qui dirige l'unité de processeur (14) pour réaliser les étapes de:
(a) autorisation du propriétaire du terminal mobile (1) pour qu'il stocke des données d'identification d'appelant qui incluent un jeu de numéros d'appel qui sont associés à un groupe d'appelants autorisés;
(b) pendant l'activation du terminal mobile (1), autorisation du terminal mobile (1) pour qu'il établisse une liaison de communication avec le réseau de communication (3);
(c) suite à l'établissement de la liaison de communication avec le réseau de communication (3), vérification de si oui ou non des données d'identification d'appelant qui sont associées à un appel arrivant qui est reçu par le terminal mobile (1) correspondent aux données d'identification d'appelant qui sont stockées dans l'unité de mémoire (15) du terminal mobile (1) et qui sont associées au groupe d'appelants autorisés; et
(d) validation du terminal mobile (1) pour qu'il émette en sortie un signal de commande sur le dispositif (2) de manière à valider le dispositif (2) pour qu'il réalise une fonction en réponse au signal de commande,
**caractérisé en ce que** le dispositif (2) est un dispositif de commutateur et le code dirige en outre l'unité de processeur (14) au niveau de l'étape (a) pour autoriser le propriétaire à stocker dans l'unité de mémoire (15) des données d'identification de commande de commutation qui sont associées à des paramètres de tonalité de sonnerie prédéterminés autres que des données d'identification d'appelant;
pour vérifier, lorsqu'une correspondance est détectée au niveau de l'étape (c) et suite à la menée à terme de l'appel arrivant, si oui ou non les caractéristiques de tonalités de sonnerie qui sont générées par l'appel arrivant correspondent à l'un des paramètres de tonalité de sonnerie prédéterminés; et
pour exécuter l'étape (d) seulement lorsqu'il y a une correspondance avec les caractéristiques de tonalités de sonnerie, la sortie de signal de commande au niveau de l'étape (d) étant une sortie qui est associée aux données d'identification de commande de commutation qui correspondent au paramètre de tonalité de sonnerie en correspondance et étant telle qu'elle valide le dispositif de commutateur (2) pour qu'il se commute sur un mode souhaité.

6. Terminal de commande susceptible d'une communication sans fil avec un réseau de communication (3) pour commander un dispositif (2), ledit terminal de commande comprenant:
un module radiofréquence (12);
une unité de mémoire (15);
un moyen pour autoriser le propriétaire dudit terminal de commande à stocker des données d'identification d'appelant qui incluent un jeu de numéros d'appel qui sont associés à un groupe d'appelants autorisés, dans ladite unité de mémoire (15);
un moyen pour autoriser ledit terminal de commande à établir une liaison de communication avec le réseau de communication (3) via ledit module radiofréquence (12) pendant une activation dudit terminal de commande;
un moyen pour vérifier si oui ou non des données d'identification d'appelant qui sont associées à un appel arrivant qui est reçu par ledit terminal de commande correspondent aux données d'identification d'appelant qui sont stockées dans ladite unité de mémoire (15) et qui sont associées au groupe d'appelants autorisés suite à l'établissement de la liaison de communication avec le réseau de communication (3); et
un moyen pour émettre en sortie un signal de commande sur le dispositif (2) de manière à valider le dispositif (2) pour qu'il réalise une fonction souhaitée en réponse au signal de commande,
**caractérisé en ce que** le dispositif (2) est un dispositif de commutateur; **en ce que** le moyen pour autoriser le propriétaire à stocker des données d'identification d'appelant autorise également le propriétaire à stocker des données d'identification de commande de commutation qui sont associées à des paramètres de tonalité de sonnerie prédéterminés autres que des données d'identification d'appelant;
**en ce que** le terminal de commande comprend un moyen pour vérifier, suite à la menée à terme de l'appel arrivant, si oui ou non les caractéristiques de tonalités de sonnerie qui sont générées par l'appel arrivant correspondent à l'un des paramètres de tonalité de sonnerie prédéterminés lorsqu'une correspondance de données d'identification d'appelant est détectée; et
**en ce que** le signal de commande est associé à des données d'identification de commande de commutation qui correspondent audit un correspondant des paramètres de tonalité de sonnerie prédéterminés, et le signal de commande est tel qu'il valide le dispositif de commutateur (2) pour qu'il se commute sur un mode souhaité lorsqu'une correspondance entre des caractéristiques de tonalités de sonnerie et les paramètres de tonalité de sonnerie prédéterminés est détectée.

7. Terminal de commande selon la revendication 6, comprenant:
une unité d'entrée d'utilisateur (13);
une unité de processeur (14) qui est couplée à ladite unité d'entrée d'utilisateur (13), à ladite unité de mémoire (15) et audit module radiofréquence (12) et qui est adaptée pour être couplée au dispositif de commutateur (2); et
un produit de programme d'ordinateur selon la revendication 5 qui est résident dans ladite unité de mémoire (15) pour valider ledit terminal de commande pour qu'il commande le dispositif de commutateur (2) et ainsi, ladite unité de processeur constitue ledit moyen d'autorisation et ledit moyen de vérification.

8. Terminal de commande selon la revendication 6 ou 7, comprenant un moyen pour valider le terminal mobile (1) pour qu'il envoie un message sur le groupe d'appelants autorisés par l'intermédiaire du réseau de communication (3), le message indiquant le mode courant du dispositif de commutateur (2).

9. Terminal de commande selon la revendication 6, 7 ou 8, comprenant un moyen pour autoriser le propriétaire à stocker un code de sécurité de référence dans l'unité de mémoire (15) du terminal mobile (1); pour autoriser l'utilisateur du terminal mobile (1) à entrer un code de sécurité; pour vérifier si oui ou non le code de sécurité correspond au code de sécurité de référence; et pour valider un fonctionnement supplémentaire du terminal mobile (1) seulement lorsque le code de sécurité correspond au code de sécurité de référence.

10. Terminal de commande selon la revendication 6, 7, 8 ou 9, dans lequel les paramètres de tonalité de sonnerie prédéterminés comprennent des nombres spécifiques de tonalités de sonnerie ou des durées spécifiques de tonalités de sonnerie comme transmis avant la menée à terme de l'appel.
